# EUROPÄISCHE PATENTSCHRIFT

(11) **EP 1 703 172 B1**
(45) Veröffentlichungstag und Bekanntmachung des Hinweises auf die Patenterteilung: **01.08.2007**
(21) Anmeldenummer: 06004315.5
(22) Anmeldetag: 03.03.2006
(51) Int. Cl.: F16H 45/02

(54) **Hydrodynamische Kopplungsvorrichtung mit Überbrückungskupplung**
Hydrodynamic coupling device with lock-up clutch
Dispositif hydrodynamique de couplage avec embrayage de pontage

(30) Priorität: 15.03.2005 DE 102005012242
(43) Veröffentlichungstag der Anmeldung: 20.09.2006
(73) Patentinhaber: ZF FRIEDRICHSHAFEN AG, 88046 Friedrichshafen (DE)
(72) Erfinder: Heuler, Michael, 97080 Würzburg (DE); Ackermann, Jürgen, Dr., 97421 Schweinfurt (DE); Adelmann, Thomas, 97282 Retzstadt (DE); Gajda, Christoph, 97421 Schweinfurt (DE)

(56) Entgegenhaltungen:
- EP-A- 0 409 088
- DE-A1- 4 423 640
- PATENT ABSTRACTS OF JAPAN Bd. 002, Nr. 069 (M-021), 25. Mai 1978 (1978-05-25) & JP 53 032264 A (TOYOTA MOTOR CORP), 27. März 1978 (1978-03-27)
- PATENT ABSTRACTS OF JAPAN Bd. 018, Nr. 090 (M-1560), 15. Februar 1994 (1994-02-15) & JP 05 296313 A (NISSAN MOTOR CO LTD), 9. November 1993 (1993-11-09)
- PATENT ABSTRACTS OF JAPAN Bd. 2003, Nr. 02, 5. Februar 2003 (2003-02-05) & JP 2002 310262 A (EXEDY CORP), 23. Oktober 2002 (2002-10-23)
- PATENT ABSTRACTS OF JAPAN Bd. 2000, Nr. 22, 9. März 2001 (2001-03-09) & JP 2001 132819 A (TOYOTA CENTRAL RES & DEV LAB INC; TOYOTA MOTOR CORP), 18. Mai 2001 (2001-05-18)
- PATENT ABSTRACTS OF JAPAN Bd. 1998, Nr. 11, 30. September 1998 (1998-09-30) & JP 10 148249 A (EXEDY CORP), 2. Juni 1998 (1998-06-02)

## Beschreibung

Die Erfindung betrifft eine hydrodynamische Kopplungsvorrichtung gemäß dem Oberbegriff des Anspruches 1.

Durch die JP 53-032264 A ist eine solche hydrodynamische Kopplungsvorrichtung, als hydrodynamischer Drehmomentwandler ausgebildet, bekannt, deren Kupplungsgehäuse in üblicher Weise mit einem Antrieb, wie beispielsweise einer Brennkraftmaschine, in Drehverbindung gebracht wird und ein Pumpenrad umfasst, das mit einem Turbinenrad und einem Leitrad einen hydrodynamischen Kreis bildet. Während das Turbinenrad mit einem Abtrieb, wie beispielsweise einer Getriebeeingangswelle, drehfest verbunden ist, ist das Leitrad über einen Freilauf auf einer Stützwelle angeordnet, die radial zwischen einer Pumpenradnabe und der Getriebeeingangswelle vorgesehen ist. Darüber hinaus weist die hydrodynamische Kopplungsvorrichtung auch eine Überbrückungskupplungmit einer Kupplungsscheibe mit beidseitigen Reibbelägen sowie einem Kolben auf, der axial verlagerbar in dem Kupplungsgehäuse angeordnet ist.

Die hydrodynamische Kopplungsvorrichtung ist als Zwei-Leitungs-System ausgebildet, wodurch sich folgende Druck- bzw. Strömungsverhältnisse ausbilden:

An einen ersten Strömungsweg, der einen Durchflusskanal radial zwischen der Pumpenradnabe und der Stützwelle aufweist, ist eine erste Druckmittelleitung angeschlossen. Der erste Strömungsweg mündet seitlich des Freilaufes des Leitrades und dient zur Versorgung des hydrodynamischen Kreises. Bedingt durch einen Überdruck im hydrodynamischen Kreis sowie einem demselben wirkungsmäßig zugeordneten Kolbenraum axial zwischen dem Kolben und dem Turbinenrad wird der Kolben von einem am Kupplungsgehäuse radial außen vorgesehenen Ansatz, der, ebenso wie der Kolben, eine Reibfläche für die Reibbeläge der Kupplungsscheibe der Überbrückungskupplung bereit stellt, abgehoben, wodurch eine Drehmitnahme des Kolbens durch das Kupplungsgehäuse zumindest reduziert wird. Umgekehrt wird diese Drehmitnahme über die Reibflächen wenigstens verstärkt, wenn über eine zweite Druckmittelleitung ein dem Kolben zugeordneter, axial zwischen demselben und dem Gehäusedeckel vorgesehener Druckraum mit Überdruck gegenüber dem hydrodynamischen Kreis beaufschlagt wird und der Kolben dadurch eine Axialverlagerung in Richtung zum Ansatz am Kupplungsgehäuse erfährt. Die zweite Druckmittelleitung ist an einen zweiten Strömungsweg angeschlossen, der über eine Mittenbohrung der Getriebeeingangswelle führt. Beide Strömungswege sind jeweils an einen Fluidmittelvorrat angeschlossen.

Dem Kolben ist eine Abdichtung zugeordnet, durch welche der hydrodynamische Kreis und damit der Kolbenraum vom Druckraum druckdicht getrennt sind. Ohne die Möglichkeit eines Druckausgleichs zwischen den Räumen beidseits des Kolbens wäre nicht auszuschließen, dass der im hydrodynamischen Kreis bei eingerückter Überbrückungskupplung anliegende Druck den im Druckraum anliegenden Druck übersteigt, und hiedurch zumindest eine Druckentlastung des Kolbens gegenüber dem Ansatz am Kupplungsgehäuse auslöst. Dies hätte einen Schlupf im Bereich der Reibflächen zur Folge, und damit eine unerwünschte Aufheizung des Kupplungsfluids zum einen, aber auch der Reibflächen zum anderen. Um dieses Problem zu mindern, sind im Kolben in dessen mittlerem Bereich Durchgangsöffnungen ausgebildet, die allerdings üblicherweise durch jeweils ein Rückschlagventil verschlossen sind. Erst bei einem Überdruck im hydrodyamischen Kreis gegenüber dem Druckraum wird das jeweilige Rückschlagventil geöffnet, und gewährt einem geringen Volumenstrom an Kupplungsfluid einen Durchfluß durch die Durchgangsöffnungen. Die Durchgangsöffnungen bilden demnach in Verbindung mit den Rückschlagventilen eine Druckbereichsverbindung. Diese ist, wegen ausschließlichen Abhängigkeit von den lokalen Druckverhältnissen an den Rückschlagventilen unabhängig von der jeweiligen Stellung des Kolbens zwischen dessen Einrück- und Ausrückposition und damit vom jeweiligen Schaltzustand der Überbrückungskupplung.

Nachteilig bei dieser Druckbereichsverbindung ist, dass die von den Rückschlagventilen jeweils freigegebenen Querschnitte der Durchgangsöffnungen insbesondere bei einem geringen Drucküberschuss im hydrodynamischen Bereich sehr klein sind, so dass die insbesondere dann als Drosseln wirksamen Durchgangsöffnungen wenig Kupplungsfluid in den Druckraum abfließen lassen. Sofern diese Durchgangsöffnungen die einzige Möglichkeit darstellen, um erhitztes Kupplungsfluid aus dem Kupplungsgehäuse herauszuführen, muss der Volumenstrom frischen , Kupplungsfluids entsprechend begrenzt sein. Bei starker Erhitzung im Bereich der Reibflächen, beispielsweise aufgrund eines Schlupfes, kann diese Kopplungsvorrichtung somit kaum reagieren.

Auch die JP 05-296313 A sowie die JP 2001-115067 A zeigen jeweils einen gegenüber einem Kupplungsgehäuse abgedichteten Kolben einer Überbrückungskupplung, wobei dem Kolben zumindest ein durch jeweils ein Ventil verschließbarer Strömungsdurchlass zugeordnet ist. Das Ventil ist durch Vorgabe einer Federvorspannung derart ausgelegt, dass es bis zum Erreichen eines vorbestimmten Überdruckes in einer zwischen Gehäusedeckel und Kolben vorgesehenen Druckkammer gegenüber einem auf die Gegenseite des Kolbens einwirkenden hydrodynamischen Kreis den Strömungsdurchlass verschließt, um einen raschen Druckanstieg im hydrodyamischen Kreis zugunsten eines verzögerungsarmen Einrückens der Überbrückungskupplung zu ermöglichen. Umgekehrt wird beim Ausrücken der Überbrückungskupplung infolge Überschreitung eines vorbestimmten Überdruckes in der Druckkammer das Ventil geöffnet, wobei allerdings der hierdurch freigegebene Strömungsquerschnitt in Kombination mit der Abdichtung zwischen Kupplungsgehäuse und Kolben dafür sorgt, dass ein vorbestimmter Überdruck in der Druckkammer gegenüber dem hydrodynamischen Kreis erhalten bleibt, um den Kolben zur Vermeidung von Schlupfverlusten vom Gehäusedeckel getrennt zu halten.

Durch die DE 44 23 640 A1 ist eine weitere hydrodynamische Kopplungsvorrichtung, als hydrodynamischer Drehmomentwandler ausgebildet, bekannt, deren Kupplungsgehäuse in üblicher Weise mit einem Antrieb, wie beispielsweise einer Brennkraftmaschine, in Drehverbindung gebracht wird und ein Pumpenrad umfasst, das mit einem Turbinenrad und einem Leitrad einen hydrodynamischen Kreis bildet. Während das Turbinenrad mit einem Abtrieb, wie beispielsweise einer Getriebeeingangswelle, drehfest verbunden ist, ist das Leitrad über einen Freilauf auf einer Stützwelle angeordnet, die radial zwischen einer Pumpenradnabe und der Getriebeeingangswelle vorgesehen ist. Darüber hinaus weist die hydrodynamische Kopplungsvorrichtung auch eine Überbrückungskupplung mit einem Kolben auf, der drehfest, aber axial verlagerbar mit dem Kupplungsgehäuse verbunden ist.

Die hydrodynamische Kopplungsvorrichtung ist als konventionelles Zwei-Leitungs-System ausgebildet. Wesentliches Prinzip eines derartigen Zwei-Leitungs-Systems, aber auch wesentlicher Nachteil ist die Anordnung der Überbrückungskupplung als Trennstelle zwischen dem hydrodynamischen Kreis und einem dem Kolben zugeordneten, axial zwischen demselben und dem Gehäusedeckel vorgesehenen Druckraum. Bei geöffneter Überbrückungskupplung besteht demnach eine einen Druckausgleich zumindest in diesem radialen Erstreckungsbereich zulassende Verbindung zwischen hydrodynamischem Kreis und Druckraum, während bei geschlossener Überbrückungskupplung sich im hydrodynamischen Kreis auch in unmittelbarer Nachbarschaft zur Überbrückungskupplung problemlos ein Druckniveau ausbilden kann, das sich erheblich von demjenigen im Druckraum unterscheiden kann. Hieran ändert auch eine eventuell in der Überbrückungskupplung vorgesehene Nutung nichts, da diese, gemessen an der Gesamtversorgung von hydrodynamischen Kreis und Druckraum mit Kupplungsfluid, stets nur einen sehr geringen Leckagestrom passieren lässt, und somit nicht geeignet ist, einen spürbaren Einfluss auf die Druckbedingungen in den beiden Druckräumen zu nehmen.

Diese Situation wirkt sich insbesondere bei Schubbetrieb, also bei gegenüber dem Antrieb höheren Drehzahlen am Abtrieb, nachteilig aus, sobald zugunsten der Nutzung einer eventuellen Bremswirkung des Antriebs, zur Reduzierung oder Vermeidung eines länger andauernden, wirkungsgradverschlechternden Schlupfes oder zur Verhinderung eines ungebremsten Hochlaufs des Antriebs bei plötzlichem Übergang von Schubbetrieb auf Zugbetrieb die Überbrückungskupplung geschlossen werden soll. Hierbei tritt folgender unangenehmer Effekt auf:

Aufgrund der Befüllung der hydrodynamischen Koppplungsvorrichtung mit Kupplungsfluid drängt dieses fliehkraftbedingt nach radial außen, wobei im Drehzentrum der Kopplungsvorrichtung idealerweise vom Druckzustand "Null" auszugehen ist, mit zunehmendem Abstand von diesem Drehzentrum dagegen monoton ansteigende Druckwerte vorliegen, die im radialen Erstreckungsbereich der üblicherweise radial weit außen angeordneten Überbrückungskupplung näherungsweise ein Maximum erreichen. Der Anstieg dieser Druckwerte bei Schubbetrieb ist im hydrodynamischen Kreis größer als der Anstieg der Druckwerte im Druckraum, da das Kupplungsfluid im Druckraum im wesentlichen mit der antriebsseitigen Drehzahl des Kupplungsgehäuses rotiert, im hydrodynamischen Kreis dagegen mit der schubbedingt höheren abtriebsseitigen Drehzahl des Turbinenrades. Bei Berücksichtigung der Randbedingung, dass bei geöffneter Überbrückungskupplung innerhalb deren radialen Erstreckungsbereichs angeglichene Druckzustände im hydrodynamischen Kreis und im Druckraum auftreten, wirken sich die unterschiedlichen Druckanstiegsverläufe beidseits des Kolbens dadurch aus, dass der Druckanstiegsverlauf im Druckraum - ausgehend vom Radialbereich der Überbrückungskupplung und nach radial innen führend - einer geringeren Druckabnahme unterworfen ist als der Druckanstiegsverlauf an der Gegenseite des Kolbens, also im hydrodynamischen Kreis. Die Folge hiervon ist, dass im Druckraum radial innerhalb der Überbrückungskupplung ein Überdruck gegenüber dem hydrodynamischen Kreis besteht, durch welchen der Kolben stabil in Ausrückposition gehalten ist. Wird unter diesen Bedingungen ein Einregelvorgang zum Schließen der Überbrückungskupplung eingeleitet, so muss im hydrodynamischen Kreis ein Überdruck aufgebaut werden, der den Druck im Druckraum deutlich übersteigt. Dadurch verzögert sich das Schließen der Überbrückungskupplung erheblich. Sobald bei Erreichen des notwendigen hohen Überdruckes im hydrodynamischen Kreis der Kolben der Überbrückungskupplung in Richtung zu seiner Einrückposition bewegt wird, verengt sich die Verbindung zwischen hydrodynamischem Kreis und Druckraum, und wirkt demnach zunehmend als Drossel, die auf der Seite des Druckraumes für einen Druckabfall gegenüber dem hydrodynamischen Kreis und damit letztendlich für einen Vorzeichenwechsel der auf den Kolben einwirkenden Axialkraft sorgt. Obwohl somit der Kolben nun selbsttätig in seine Einrückposition verlagert würde, wirkt ab jetzt der bei zuvor stillstehendem Kolben noch wirkungslose, im hydrodynamischen Kreis angelegte hohe Überdruck schlagartig im Sinne einer die Einrückbewegung des Kolbens unterstützenden hohen Axialkraft mit, so dass der Kolben auf dem letzten Abschnitt seines Einrückweges über eine sehr hohe Einrückgeschwindigkeit verfügt, und dadurch sehr hart an dem axial benachbarten antriebsseitigen Bauteil des Kupplungsgehäuses, wie beispielsweise einem Gehäusedeckel, in Wirkverbindung tritt. Hierdurch wird innerhalb einer sehr kurzen Zeitspanne für einen Abbau der zuvor zwischen Antrieb und Abtrieb bestehenden Differenzdrehzahl gesorgt. Dieser Vorgang wird in einem sich bei Schubbetrieb bewegenden Fahrzeug als unangenehm harter Momentenschlag empfunden, und ist zum einen nachteilig für das Komfortempfinden der Passagiere des Fahrzeugs, zum anderen aber auch lebensdauerverkürzend für die Kopplungsvorrichtung selbst.

Der Erfindung liegt die Aufgabe zugrunde, eine hydrodynamische Kopplungsvorrichtung mit einer Überbrückungskupplung derart auszubilden, dass die letztgenannte selbst bei Abdichtung eines hydrodynamischen Kreises gegenüber einem einen Kolben der Überbrückungskupplung beaufschlagenden Druckraum bei Bedarf einen hinreichenden Volumenstrom an Kupplungsfluid aus dem hydrodynamischem Kreis in den Druckraum ermöglicht, und auch bei Schubbetrieb zumindest im wesentlichen frei von einem Momentenschlag geschlossen werden kann.

Diese Aufgabe wird durch eine hydrodynamische Kopplungseinrichtung gemäß dem Anspruch 1 gelöst. Bei konventioneller Anordnung der Dichtstelle zwischen hydrodynamischem Kreis und Druckraum, nämlich im Reibbereich der Überbrückungskupplung, würde eine zugunsten einer Kühlwirkung an diesen Reibbereichen vorgesehene, als Drossel wirksame Nutung zur Gewährleistung bestimmter Druckbedingungen sowohl im hydrodynamischen Kreis als auch im Druckraum sowie zur Einstellung eines definierten Volumenstromes von zu- und abgeführtem Kupplungsfluid einer exakten Abstimmung bedürfen. Bei der vorliegende Zuordnung der Abdichtung zum Kolben in Kombination mit der Druckbereichsverbindung muß die Nutung dagegen nicht mehr im Hinblick auf Drosselwirkung optimiert sein, sondern kann zugunsten eines hohen Wärmeübertrags ins Kupplungsfluid ausgeführt sein.

Da bei geöffneter oder zumindest teilweise geöffneter Überbrückungskupplung die hydrodynamische Kopplungsvorrichtung entsprechend der Betriebsweise mit eventuell beträchtlichem Schlupf betrieben werden kann, und hierbei erhebliche Verlustleistungen als Abwärme ins Kupplungsfluid eingebracht werden, ist die Ergänzung der Druckbereichsverbindung mit einer Kupplungsfluid-Durchlaßeinrichtung zur Steigerung des Strömungsvolumens an Kupplungsfluid sinnvoll. Die Kupplungsfluid-Durchlaßeinrichtung kann nämlich unterschiedliche Volumenströme des Kupplungsfluids in einander entgegen gesetzten Durchflußrichtungen zulassen, wobei bei Ausbildung der Kupplungsfluid-Durchlaßeinrichtung als Rückschlagventil der Volumenstrom des Kupplungsfluids aus dem hydrodynamischen Kreis in den Druckraum vergrößert werden kann, indem die Kupplungsfluid-Durchlaßeinrichtung zusätzlich zur Druckbereichsverbindung einen Strömungsdurchfluß freigibt, während in Gegenrichtung das Rückschlagventil schließt und somit lediglich die Druckbereichsverbindung für einen Übertritt von Kupplungsfluid verfügbar ist. Bei Ausbildung des Rückschlagventils als Pilzventil ist dieses mit Vorzug mit einem an die zweite Wandung der Druckkammer, vorteilhafterweise hierbei an die entsprechende Wandung des Kolbens, anpreßbaren Verschlußdeckel ausgebildet und verfügt zudem über einen Schaft, der in einer Aufnahmeöffnung der zweiten Wandung verliergesichert, aber axial verlagerbar aufgenommen ist und ebenso wie der Verschlussdeckel aus Kunststoff bestehen kann. Durch den Verschlußdeckel ist der Strömungsdurchfluß in Abhängigkeit von der jeweils anliegenden Druckdifferenz beidseits des Verschlußdeckels freigebbar oder verschließbar.]

Aufgrund dieser Ausführung der hydrodynamischen Kopplungsvorrichtung werden sich zwar jeweils zwischen der Drehachse und dem radialen Erstreckungsbereich der Überbrückungskupplung sowohl im hydrodynamischen Kreis als auch im Druckraum Druckanstiegsverläufe mit im wesentlichen monotoner Anstiegscharakteristik ausbilden, von denen derjenige im hydrodynamischen Kreis bei Schub aufgrund des mit der abtriebsseitig höheren Drehzahl umlaufenden Turbinenrades über einen höheren Druckanstieg verfügt als derjenige im Druckraum auf der Gegenseite des Kolbens, jedoch werden diese beiden Druckanstiegsverläufe aufgrund der speziellen Anordnung der Dichtstelle zwischen hydrodynamischem Kreis und Druckraum, erzielt durch Zuordnung der Abdichtung zum Kolben, keine das Schaltverhalten der Überbrückungskupplung bestimmende gegenseitige Druckbeeinflussung ausüben, durch welche eine Wirkumkehr der den Kolben beaufschlagenden Axialkraft entstehen würde. Solange der Kolben in seiner Ausrückposition verharren soll, genügt die Druckversorgung des hydrodynamischen Kreises, während zum Einrücken, sobald ein an eine Druckversorgung angeschlossener Druckkreis drucklos geschaltet wird, und damit die Druckversorgung sowohl des hydrodynamischen Kreises als auch des Druckraumes kurzzeitig aufgehoben ist, das Befüllen des Druckraumes ausreicht, um die Einrückneigung des Kolbens bereit zu stellen. Somit genügt, sobald daraufhin der Druckraum an die Druckversorgung angeschlossen wird, bereits ein geringer Überdruck im Druckraum gegenüber dem hydrodynamischen Kreis für ein Einrücken des Kolbens. Aufgrund dieses geringen Überdruckes ist die Bewegung des Kolbens und damit das Schließverhalten der Überbrückungskupplung feinfühlig beeinflussbar. Der Kolben greift somit bei Erreichen seiner Einrückposition unter Vermeidung eines Momentenstoßes weich am entsprechenden antriebsseitigen Bauteil des Kupplungsgehäuses, wie dem Gehausedeckel, an. Entsprechend hoch ist das Komfortempfinden für Passagiere eines Fahrzeuges, das mit einer derartigen Kopplungsvorrichtung versehen ist.

Da bereits ein geringer Überdruck im Druckraum genügt, um selbst bei Schubbetrieb für eine Bewegung des Kolbens in seine Einrückposition zu sorgen, erfolgt dieses Schließen nahezu verzögerungsfrei, so dass leistungsmindernde und/oder wirkungsgradverschlechternde Betriebsphasen der hydrodynamischen Kopplungsvorrichtung auch bei Schubbetrieb vermeidbar sind. Selbstverständlich wird bei einer derart raschen Reaktion beim Schließen der Überbrückungskupplung auch bei einem unvermittelten Übergang aus dem Schubbetrieb in einen Zugbetrieb ein wegen des Fehlens abtriebsseitiger Last nahezu trägheitsfreies Hochdrehen des Antriebs vermieden.

Eine besonders vorteilhafte Ausführung liegt vor, wenn die Strömungsführung in der hydrodynamischen Kopplungsvorrichtung derart erfolgt, dass zumindest bei geschlossener Überbrückungskupplung eine Zwangsführung frischen Kupplungsfluids über eine erfindungsgemäße Druckbereichsverbindung zur Überbrückungskupplung vorgesehen ist. Hierzu ist dem Kolben der Überbrückungskupplung eine mit dem Kupplungsgehäuse verbundene Fluidraumtrennung zugeordnet, die nach Durchgang frischen Kupplungsfluids aus dem Druckraum durch die Druckbereichsverbindung dieses Kupplungsfluid in Richtung zur Überbrückungskupplung umlenkt, so dass das Kupplungsfluid erst nach Durchströmung der Überbrückungskupplung in den eigentlichen hydrodynamischen Kreis einströmen kann.

Mit Vorzug kann die Fluidraumtrennung Zusatzfunktionen übernehmen, beispielsweise als Abstützung zur Aufnahme der vom Kolben in Einrückposition ausgeübten axialen Anpreßkraft sowie zur Drehsicherung eventueller der

Überbrückungskupplung zugeordneter Lamellen, so dass die Fluidraumtrennung als Lamellenträger wirksam sein kann.

Die Erfindung ist nachfolgend anhand einer Zeichnung ausführlich erläutert. Es zeigt:
- Fig. 1: die obere Hälfte eines Längsschnittes durch einen hydrodynamischen Drehmomentwandler mit über einen Kolben verfügender Überbrückungskupplung in Zwei-Leitungs-Ausführung;
- Fig. 2: eine andere Ausführung der Überbrückungskupplung;
- Fig. 3: eine vergrößerte Herauszeichnung einer Kupplungsfluid-Durchlaßeinrichtung im Kolben der Überbrückungskupplung.

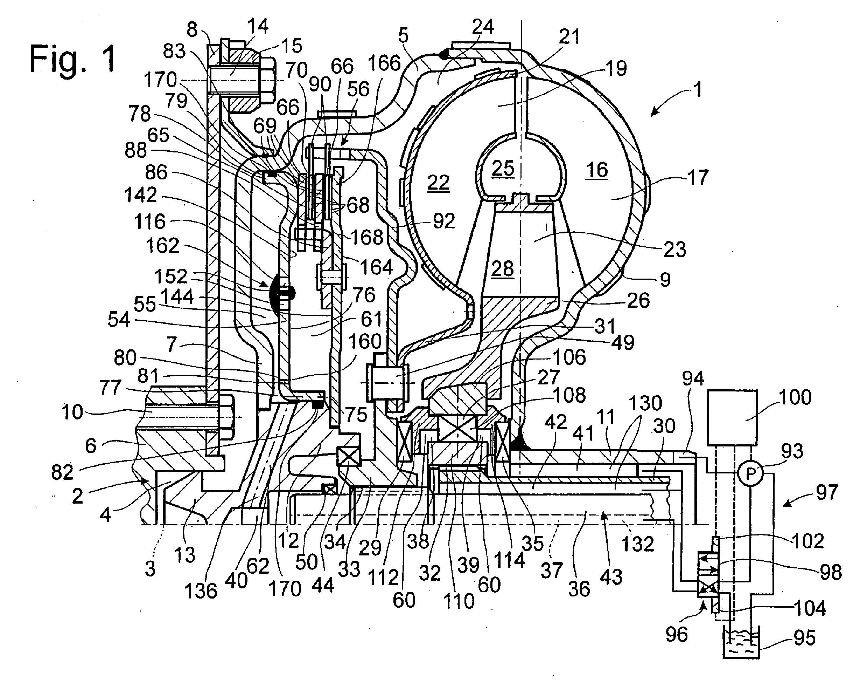

In Fig. 1 ist eine hydrodynamische Kopplungsvorrichtung 1 in Form eines hydrodynamischen Drehmomentwandlers dargestellt, der um eine Drehachse 3 Rotationsbewegungen auszuführen vermag. Der hydrodynamische Drehmomentwandler verfügt über ein Kupplungsgehäuse 5, das an seiner einem Antrieb 2, wie beispielsweise einer Brennkraftmaschine mit einer Kurbelwelle 6, zugewandten Seite einen Gehäusedeckel 7 aufweist, der fest mit einer Pumpenradschale 9 verbunden ist. Diese geht im radial inneren Bereich in eine Pumpenradnabe 11 über.

Zurückkommend auf den Gehäusedeckel 7, weist dieser im radial inneren Bereich eine einen Lagerzapfen 13 tragende Zapfennabe 12 auf, wobei der Lagerzapfen 13 in einer Ausnehmung 4 der Kurbelwelle 6 zur antriebsseitigen Zentrierung des Kupplungsgehäuses 5 aufgenommen ist. Weiterhin verfügt der Gehäusedeckel 7 über eine Befestigungsaufnahme 15, die über eine Flexplatte 8 zur Befestigung des Kupplungsgehäuses 5 an der Kurbelwelle 6 dient, und zwar mittels Befestigungselementen 14, vorzugsweise in Form von Schrauben. Die Flexplatte 8 ihrerseits ist über Befestigungselemente 10, ebenfalls vorzugsweise in Form von Schrauben, an der Kurbelwelle 6 befestigt.

Die bereits erwähnte Pumpenradschale 9 bildet zusammen mit Pumpenradschaufeln 16 ein Pumpenrad 17, das mit einem eine Turbinenradschale 21 sowie Turbinenradschaufeln 22 aufweisenden Turbinenrad 19 sowie mit einem Leitrad 23 zusammenwirkt. Das letztgenannte verfügt über an einer Leitradnabe 26 vorgesehene Leitradschaufeln 28 und bildet gemeinsam mit dem Pumpenrad 17 und dem Turbinenrad 19 einen hydrodynamischen Kreis 24, der einen Innentorus 25 umschließt.

Das Leitrad 23 ist über seine Leitradnabe 26 auf einem Außenkörper 106 eines Freilaufes 27 angeordnet, der über einen Wälzelemententeil 108 auf einem Innenkörper 110 angeordnet ist. Der Außenkörper 106 zentriert über eine antriebsseitige Druckscheibe 112 sowie über eine abtriebsseitige Druckscheibe 114, die beide nutungsfrei ausgebildet sind, den Innenkörper 110, und stützt sich antriebsseitig über die antriebsseitige Druckscheibe 112, eine antriebsseitige Axiallagerung 29, einen Torsionsschwingungsdämpfer 18 und eine Lagerung 44 an der Zapfennabe 12 axial ab, abtriebsseitig dagegen über die abtriebsseitige Druckscheibe 114 und eine abtriebsseitige Axiallagerung 35 an der Pumpenradnabe 11.

Das Leitrad 23 steht über den Innenkörper 110 seines Freilaufes 27 in drehfester, aber axial relativ verschiebbarer Verzahnung 32 mit einer Stützwelle 30, die unter Belassung eines im Wesentlichen ringförmigen, radial äußeren Durchflußkanals 41 radial innerhalb der Pumpenradnabe 11 angeordnet ist. Die als Hohlwelle ausgebildete Stützwelle 30 ihrerseits umschließt unter Belassung eines im Wesentlichen ringförmigen Durchflusskanals 42 eine als Abtrieb 43 wirksame Getriebeeingangswelle 36, die mit einer Mittenbohrung 37 zum Durchgang von Kupplungsfluid versehen ist. Während die Durchflußkanäle 41 und 42 zur Bildung eines ersten Strömungsweges 130 vorgesehen sind, dient die Mittenbohrung 37 als zweiter Strömungsweg 132.

Die Getriebeeingangswelle 36 nimmt über eine Verzahnung 34 eine mittels einer Dichtung 50 abgedichtete Turbinennabe 33 drehfest, aber axial verschiebbar auf, wobei diese Turbinennabe 33 mittels Durchgangsnieten 49 sowohl mit einem Turbinenradfuß 31 des Turbinenrades 19 als auch mit einem ersten Lamellenträger 92 einer Überbrückungskupplung 56 drehfest verbunden ist.

Die bereits erwähnten Durchflußkanäle 41 und 42 führen zu einer ersten Druckmittelleitung 60, die durch nicht gezeigte Durchgänge zumindest einer der Druckscheiben 112, 114 in den hydrodynamischen Kreis durchtreten kann. Hinzu kommt ein die Mittenbohrung 37 der Getriebeeingangswelle 36 an eine zweite Druckmittelleitung 62 anschließender, in der Zapfennabe 12 ausgebildeter Übergangsraum 40. Die zweite Druckmittelleitung ist in Form zumindest eines in der Zapfennabe 12 mit einer Radialkomponente verlaufenden Kanals 136 ausgebildet, und mündet in einen axial zwischen dem Gehäusedeckel 7 und einem Kolben 54 der Überbrückungskupplung 56 vorgesehenen-Druckraum 55. Die vom Druckraum 55 abgewandte Seite des Kolbens 54 bildet eine erste Wandung 142 eines Kolbenraums 61, der an seiner dem Turbinenrad 19 zugewandten Seite von einer zweiten Wandung 144 begrenzt ist, die aus nachfolgend erläuterten funktionalen Gründen im folgenden als Fluidraumtrennung 164 bezeichnet ist. Diese ist an der Zapfennabe 12 befestigt.

Der Kolben 54 weist in seinem radial inneren Ende 77 eine Druckbereichsverbindung 160 in Form einer Drosselstelle 80 mit zumindest einer Durchgangsöffnung 81 auf, welche den Druckraum 55 mit dem Kolbenraum 61 verbindet, der wirkungsmäßig dem hydrodynamischen Kreis 24 zugeordnet ist. Im radial mittleren Erstreckungsbereich 76 kann der Kolben 54 überdies mit einer Kupplungsfluid-Durchlasseinrichtung 162 in Form eines Rückschlagventils 116 ausgebildet sein, auf dessen konstruktive Ausführung,

Wirkungsweise und Funktion an anderer Stelle ausführlich eingegangen wird. Sowohl am radial inneren Ende 77 des Kolbens 54 als auch an einem radial äußeren Ende 79 desselben ist jeweils ein Axialansatz 75, 78 ausgebildet, der an seiner jeweils dem Kupplungsgehäuse 5 zugewandten Radialseite jeweils eine Vertiefung zur Aufnahme je einer Kolbendichtung 82, 83 trägt, die an der jeweils zugeordneten Stelle des Kupplungsgehäuses 5, im Fall der Abdichtung 82 also an der Zapfennabe 12 und im Fall der Abdichtung 83 am Gehäusedeckel 7, radial in Anlage kommt und somit der Bewegung des Kolbens 54 nachführbar, mit dem jeweiligen Axialansatz 75, 78 dichtend zur Anlage kommt. Die beiden Kolbendichtungen 82, 83 bilden zusammen eine Abdichtung 170.

Entsprechend der Beaufschlagung der ersten Druckmittelleitung 60 oder der zweiten Druckmittelleitung 62 und damit in Abhängigkeit von den Druckverhältnissen im hydrodynamischen Kreis 24 sowie im Druckraum 55 ist der Kolben 54 in Axialrichtung zwischen zwei unterschiedlichen Grenzstellungen, also zwischen Ausrückposition und Einrückposition bewegbar, auf die nachfolgend noch eingegangen wird.

Axial zwischen dem Kolben 54 und der Fluidraumtrennung 164 sind, im jeweils radial äußeren Bereich derselben, mit dem radial äußeren Lamellenträger 92 mittels einer Verzahnung 90 drehfeste radial äußere Lamellen 66 angeordnet, die mit radial inneren Lamellen 65 ein Eingriff bringbar sind, die über jeweils eine Verzahnung 88 drehfest an einem radial inneren Lamellenträger 86 aufgenommen sind, der an der Fluidraumtrennung 164 befestigt ist. Die radial äußeren Lamellen 66 verfügen jeweils über beidseitige Reibbeläge 68, wobei durch die beiden jeweils der radial inneren Lamelle 65 zugewandten Reibbeläge 68 in Verbindung mit je einer an der radial inneren Lamelle 65 vorgesehenen Reibzone je ein Reibbereich 69 bereitgestellt wird. Auch durch den von der abtriebsseitigen radial inneren Lamelle 65 abgewandten Reibbelag 68 wird ein Reibbereich 69 mit einer Reibzone an der Fluidraumtrennung 164 bereitgestellt. Die dem Kolben 54 benachbarte radial innere Lamelle 65 nimmt, zumindest bei Axialbeaufschlagung durch den Kolben 54 in dessen Einrückposition, im wesentlichen drehfest den Kolben 54 mit.

Die einzelnen Reibbereiche 69 werden aktiviert, sobald die Reibbeläge 68 mit_ der jeweils zugeordneten Reibzone in Wirkverbindung treten, was durch Einrücken des Kolbens 54 und damit der Überbrückungskupplung 56 geschieht. Das Einrücken des Kolbens 54 ist beendet, wenn der Kolben 54 die größtmögliche Axialannäherung innerhalb seines axialen Bewegungsbereichs an die Fluidraumtrennung 164 erfahren hat. Für den Einrückvorgang wird im Druckraum 55 ein höherer Druck als im hydrodynamischen Kreis 24 aufgebaut. Da dieser durch die Überbrückungskupplung 56 mit dem Kolbenraum 61 in Verbindung steht, und die Überbrückungskupplung 56 im Bereich der Reibbeläge 68 über Nutungen 70 verfügt, ist insbesondere dann, wenn diese Nutungen 70 mit einer Größe oder in einer Vielzahl vorgesehen sind, die einen vergleichsweise hohen Volumenstrom an Kupplungsfluid passieren lassen, der Kolbenraum 61 als Teil des hydrodynamischen Kreises 24 zu betrachten.

Umgekehrt werden die einzelnen Reibbereiche 69 deaktiviert, sobald die Wirkverbindung der Reibbeläge 68 mit der jeweils zugeordneten Reibzone aufgehoben wird, was durch Ausrücken des Kolbens 54 erfolgt. Das Ausrücken des Kolbens 54 ist beendet, wenn dieser die größtmögliche Axialannäherung innerhalb seines axialen Bewegungsbereichs an den Gehäusedeckel 7 erfahren hat. Für den Ausrückvorgang wird im hydrodynamischen Kreis 24 und damit im Kolbenraum 61 ein höherer Druck als im Druckraum 55 erzeugt.

Das Ein oder Ausrücken des Kolbens 54 der Überbrückungskupplung 56 wird wie folgt vorgenommen:

Die bereits erwähnten Durchflußkanäle 41 und 42 radial zwischen der Pumpenradnabe 11 und der Stützwelle 30 zum einen und zwischen der Stützwelle 30 und der Getriebeeingangswelle 36 zum anderen dient über die erste Druckmittelleitung 60 zur Versorgung des hydrodynamischen Kreises 24 und damit des Kolbenraums 61 mit Kupplungsfluid, während die Mittenbohrung 37 in der Getriebeeingangswelle 36 über den Übergangraum 40 und die zweiten Druckmittelleitung 62 zur Versorgung des Druckraumes 55 mit Kupplungsfluid dient. Zur Gewährleistung der jeweils korrekten Versorgung ist ein in Fig. 1 eingezeichneter Druckkreis 97 notwendig, der über eine Druckquelle 93 verfügt, deren Antrieb in üblicher Weise durch einen Antriebsnocken 94 an der Pumpenradnabe 11 erfolgt, während deren Saugseite S mit einem Fluidmittelvorrat 95 und deren Druckseite D entweder mit den Durchflußkanälen 41 und 42 verbunden werden kann, oder aber mit der Mittenbohrung 37. Die jeweilige Versorgung der Durchflußkanäle 41 und 42 oder Mittenbohrung 37 mit Kupplungsfluid erfolgt entsprechend den Vorgaben einer Steuer und/oder Regelvorrichtung 100, die nachfolgend kurz als Steuervorrichtung 100 bezeichnet ist und sowohl mit einer im Druckkreis 97 enthaltenen Umschaltvorrichtung 96 in Form eines Umschaltventils 98 als auch mit der Druckquelle 93 in Wirkverbindung steht. Mit Vorzug ist hierbei das Umschaltventil 98 als 4/2-Wegeventil ausgebildet, mit Betätigung durch Elektromagnete 102, 104, die entsprechend der Ansteuerung durch die Steuervorrichtung 100 für eine zugeordnete Auslenkung der Umschaltvorrichtung 96 sorgen.

Fig. 1 zeigt den Zustand mit dem Kolben 54 in Einrückposition. Zum Ausrücken des Kolbens 54 wird die Umschaltvorrichtung 96 durch mittels der Steuervorrichtung 100 vorgenommenen Ansteuerung des Elektromagneten 102 derart beaufschlagt, dass dieser das Umschaltventil 88 aus der in Fig. 1 eingezeichneten Position in eine zweite Position verschiebt, in welcher die Druckseite D der Druckquelle 93 mit den Durchflußkanälen 41 und 42 verbunden ist. Dort nimmt folglich der Druck zu, während er gleichzeitig in der Mittenbohrung 37 der Getriebeeingangswelle 36, die nun über das Umschaltventil 98 mit dem Fluidmittelvorrat 95 verbunden ist, absinkt.

Das über die Durchflußkanäle 42 eingeströmte Kupplungsfluid gelangt über die erste Druckmittelleitung 60 in den hydrodynamischen Kreis 24 sowie, von diesem, über die Nutungen 70 in den Reibbelägen 68 in den Kolbenraum 61 und beaufschlagt dort den Kolben 54 in Richtung zum Druckraum 55, dessen Entleerung über die zweite Druckmittelleitung 62 einsetzt. Aufgrund des sich dadurch aufbauenden Überdruckes im Kolbenraum 61 gegenüber dem Druckraum 55 wird der Kolben 54 an seiner abtriebsseitigen Kolbenwand belastet, wodurch eine Verlagerungsbewegung des Kolbens 54 in Richtung zum Gehäusedeckel 7 ausgelöst wird.

Bei weiter in den hydrodynamischen Kreis 24 nachströmendem Kupplungsfluid passiert dieses infolge des zügig ausrückenden Kolbens 54 den Bereich der Überbrückungskupplung 56 problemlos und gelangt somit als frisches Kupplungsfluid in den Kolbenraum 61. Gleichzeitig kann dort bereits enthaltenes erhitzes Kupplungsfluid über die als Drosselstelle 80 mit Durchgangsöffnungen 81 im Kolben 54 ausgebildete Druckbereichsverbindung 160 in den Druckraum 55 absickern, um von dort aus über die zweite Druckmittelleitung 62, den Übergangsraum 40 und die Mittenbohrung 37 der Getriebeeingangswelle 36 in den Fluidmittelvorrat 95 abgeleitet zu werden.

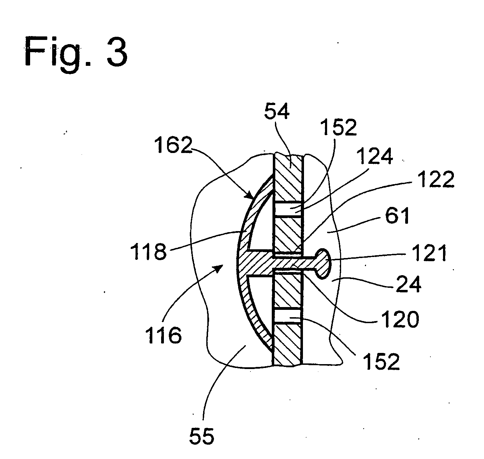

Sofern bei nicht eingerücktem Kolben 54 jeweils ein erheblicher Austausch an Kupplungsfluid im hydrodynamischen Kreis 24 vorgenommen werden soll, besteht die Möglichkeit, im Kolben 54 die bereits erwähnte Kupplungsfluid-Durchlaßeinrichung 162 in Form des Rückschlagventils 116 einzusetzen. Dieses kann gemäß Fig. 3 als pilzförmiges Kunststoffteil ausgebildet sein mit einem Verschlußdeckel 118 und einem daran angeformten, im Wesentlichen zylinderförmigen Schaft 120, der eine Aufnahmeöffnung 122 des Kolbens 54 axial durchdringt und in dieser Aufnahmeöffnung 122 mittels einer Verliersicherung 121 derart gehalten ist, dass er zwar axial verlagerbar, gleichzeitig aber gegenüber dem Kolben 54 unlösbar gehalten ist. Dicht benachbart der Aufnahmeöffnung 122 für den Schaft 120 ist der Kolben 54 von Durchlaßöffnungen 124 durchdrungen, die gemeinsam einen Strömungsdurchlaß 152 bilden, und über welche der Verschlußdeckel 118 bei einem Überdruck im hydrodynamischen Kreis 24 und damit im Kolbenraum gegenüber dem Druckraum 55 von der Seite des Kolbenraums 61 aus beaufschlagbar ist. Dadurch wird über die Durchlaßöffnungen 124 ein Abhub des Verschlußdeckels 118 von der gegenüber liegenden Seite des Kolbens 54 ausgelöst, so dass ein die- Drosselstelle 80 ergänzender Abflußweg für Kupplungsfluid durch die Durchflußöffnung 152 frei gegeben wird. Je nach von der Druckdifferenz zwischen Kolbenraum 61 und Druckraum 55 abhängiger Öffnungsweite des Verschlußdeckels 118 sowie in Abhängigkeit von der Bemessung von dessen Durchmesser und der Anzahl und/oder Größe von Durchlaßöffnungen 124 kann ein entsprechender Durchsatz von Kupplungsfluid aus dem hydrodynamischen Kreis 24 über dessen Kolbenraum 61 in den Druckraum 55 und von diesem in den Fluidmittelvorrat 95 erzeugt werden.

Um den Kolben 54 wieder einzurücken, wird die Umschaltvorrichtung 96 durch mittels der Steuervorrichtung 100 jetzt vorgenommener Ansteuerung des Elektromagneten 104 derart beaufschlagt, dass dieser das Umschaltventil 88 aus der bisherigen Position in die in Fig. 1 eingezeichnete Position zurück schiebt, in welcher die Druckseite D der Druckquelle 93 mit der Mittenbohrung 37 der Getriebeeingangswelle 36 verbunden ist. Dort nimmt folglich der Druck zu, während er gleichzeitig in den Durchflußkanälen 41 und 42, die nun über das Umschaltventil 98 mit dem Fluidmittelvorrat 95 verbunden sind, absinkt. Aufgrund dieser Druck- und Anschlußsituation wird Kupplungsfluid vom Fluidmittelvorrat 95 über die Mittenbohrung 37 der Getriebeeingangswelle 36 und die zweite Druckmittelleitung 62 in den Druckraum 55 geleitet. Unterstützt durch die Rotation des Kupplungsgehäuses 5 um die Drehachse 3 drängt das Kupplungsfluid dort nach radial außen, wo ihm aufgrund der Abdichtung 83 eine Weiterbewegung versperrt ist. Da bei Druckanstieg im Druckraum 55 das Rückschlagventil 116 mit seinem Verschlußdeckel 118 gegen die Durchflußöffnung 152 gepreßt ist und dadurch diese Verbindung des Druckraums 55 mit dem Kolbenraum 61 und daher mit dem hydrodynamischen Kreis 24 verschließt, kann im Druckraum enthaltenes Kupplungsfluid nur über die Drosselstelle 80 in den Kolbenraum 61 übertreten, wo es aufgrund der Fluidraumtrennung 164 an der an dieser vorgesehenen zweiten Wandung 144 nach radial außen umgelenkt wird. Auch im Kolbenraum 61 drängt das Kupplungsfluid, unterstützt durch die Rotation des Kupplungsgehäuses 5 um die Drehachse 3, nach radial außen, wo ihm, sobald die Lamellen 65, 66 in Anlage aneinander sowie in Anlage am jeweils benachbarten Bauteil Kolben 54 oder Fluidraumtrennung 164 gekommen sind, lediglich der Weg durch die den Reibbereichen 69 der Überbrückungskupplung 56 zugeordneten Nutungen 70 verbleibt. Dadurch entsteht eine Zwangsdurchströmung der Überbrückungskupplung 56, ausgelöst durch die als Zwangsströmungsführung 168 dienende Fluidraumtrennung 164. Das auf diese Weise in den hydrodynamischen Kreis 24 gelangende Kupplungsfluid wird, wenn es den hydrodynamischen Kreis 24 verlassen soll, über die erste Druckmittelleitung 60 in die Durchflußkanäle 41 und 42 und von diesen in den Fluidmittelvorrat 95 entleert.

Bedingt durch die funktionelle Zuordnung des Kobenraums 61 zum hydrodynamischen Kreis 24 ist die Überbrückungskupplung 56 letztendlich im hydrodynamischem Kreis 24 angeordnet. Da gleichzeitig der Kolben 54 über seine als Abdichtung 170 wirksamen Kolbendichtungen 82, 83 als Trennung zwischen dem hydrodynamischen Kreis 24 und dem Druckraum 55 und damit zwischen den beiden Druckmittelleitungen 60, 62 der als Zwei-Leitungs-System ausgebildeten hydrodynamischen Kopplungsvorrichtung 1 wirkt, erfolgt sowohl das Einrücken als auch das Ausrücken des Kolbens 54 jeweils ohne Änderung der am Kolben 54 wirkenden Druckverläufe, und damit unabhängig vom jeweiligen Betriebszustand der Kopplungsvorrichtung 1, wie beispielsweise einem Schubbetrieb.

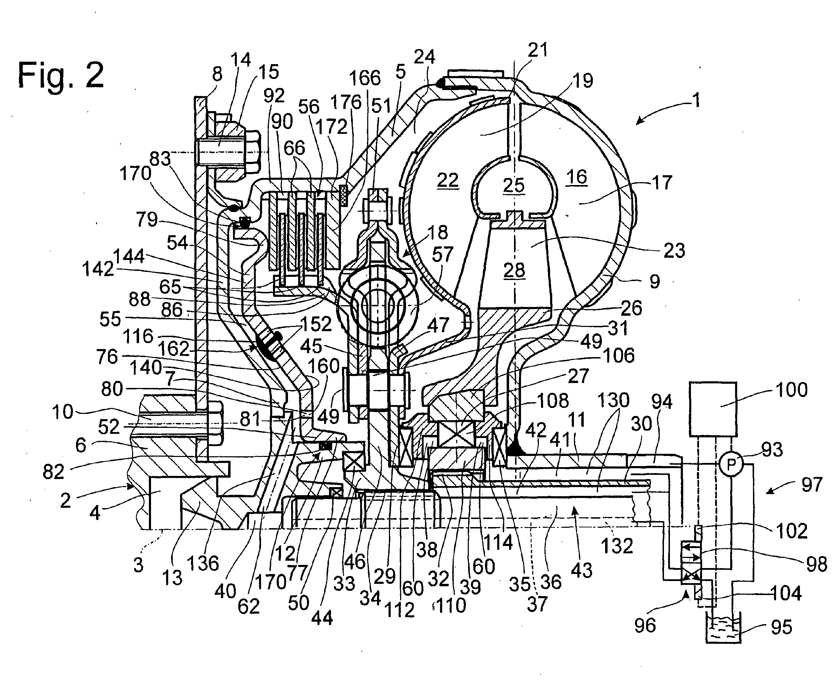

Gegenüber der Ausführung nach Fig. 1 unterscheidet sich diejenige nach Fig. 2 im wesentlichen durch den Verzicht auf die Fluidraumtrennung 164 und damit auf die Zwangsströmungsführung 168. Kupplungsfluid, das die Druckbereichsverbindung 160 und damit die Drosselstelle 80 durchdrungen hat, gelangt bei dieser Ausführung, sofern es nicht fliehkraftbedingt in Richtung zu den Lamellen 65, 66 der Überbrückungskupplung 56 umgelenkt worden ist, über einen Torsionsschwingungsdämpfer 18 unmittelbar in den hydrodynamischen Kreis 24. Bei entsprechender Abdichtung zumindest eines von als Eingangsteil 51 dienenden Deckblechen 45, 47 und/oder einer an der Turbinennabe 33 vorgesehenen, als Ausgangsteil 53 dienenden Nabenscheibe 46 kann allerdings auch der Torsionschwingungsdämpfer 18 als Zwangsströmungsführung 168 wirksam sein. Der Eingangsteil 51 des Torsionsschwingungsdämpfers 18 ist mittels Durchgangsnieten 49 gemeinsam mit einem radial inneren Lamellenträger 88 an dem Turbinenradfuß 31 angebunden, --während das Kupplungsgehäuse 5 im Umfangsbereich an -seiner radialen Innenseite aufgrund einer Verzahnung 90 als radial äußerer Lamellenträger 92 dient. In diese Verzahnung 90 ist, zusätzlich zu den radial äußeren Lamellen 66, auch eine Endlamelle 172 eingesetzt, welche die Funktion eines Axialanschlages 166 für die Lamellen 65, 66 übernimmt, sofern diese durch den Kolben 54 in Wirkverbindung aneinander gehalten werden. Die Endlamelle 172 ist durch einen Sicherungsring 176 in vom Kolben 54 fortweisender Achsrichtung gehalten.

Bezüglich des Torsionsschwingungsdämpfers 18 bleibt nachzutragen, dass zwischen dessen Eingangsteil 51 und dessen Ausgangsteil 53 Dämpfungselemente 57 vorgesehen sind, die eine Relativbewegbarkeit von Ein- und Ausgangsteil zueinander ermöglichen.

### Bezugszeichenliste

- 1.: hydrodyn. Kopplungsvorrichtung
- 2.: Antrieb
- 3.: Drehachse
- 4.: Ausnehmung
- 5.: Kupplungsgehäuse
- 6.: Kurbelwelle
- 7.: Gehäusedeckel
- 8.: Flexplatte
- 9.: Pumpenradschale
- 10.: Befestigungselemente
- 11.: Pumpenradnabe
- 12.: Zapfennabe
- 13.: Lagerzapfen
- 14.: Befestigungselemente
- 15.: Befestigungsaufnahme
- 16: Pumpenradschaufeln
- 17.: Pumpenrad
- 18.: Torsionsschwingungsdämpfer
- 19.: Turbinenrad
- 21.: Turbinenradschale
- 22: Turbinenradschaufeln
- 23.: Leitrad
- 24.: hydrodynamischer Kreis
- 25.: Innentorus
- 26.: Leitradnabe
- 27.: Freilauf
- 28: Leitradschaufeln
- 29.: antriebsseitige Axiallagerung
- 30.: Stützwelle
- 31.: Turbinenradfuss
- 32.: Verzahnung
- 33.: Turbinenradnabe
- 34: Verzahnung
- 35.: abtriebsseitige Axiallagerung
- 36.: Getriebeeingangswelle
- 37.: Mittenbohrung
- 40.: Übergangsraum
- 41.: Durchflußkanal
- 42.: Durchflußkanal
- 43.: Abtrieb
- 44.: Axiallagerung
- 45.: antriebsseitiges Deckblech
- 46.: Nabenscheibe
- 47.: abtriebsseitiges Deckblech
- 49.: Durchgangsniete
- 50.: Dichtung
- 51.: Eingangsteil
- 53.: Ausgangsteil
- 54.: Kolben
- 55.: Druckraum
- 56.: Überbrückungskupplung
- 57.: Dämpfungselemente
- 58.: Axialfederung
- 60.: erste Druckmittelleitung
- 61.: Kolbenraum
- 62.: zweite Druckmittelleitung
- 65.: Lamelle
- 66.: Lamelle
- 68.: Reibbelag
- 69.: Reibbereich
- 70.: Nutungen
- 72.: Verzahnung
- 74.: Gegenverzahnung
- 75.: Axialansatz
- 76.: radial mittlerer Erstreckungsbereich
- 77.: radial inneres Ende
- 78.: Axialansatz
- 79.: 79. radial äußeres Ende
- 80.: Drosselstelle
- 81.: Durchgangsöffnung
- 82.: Kolbendichtung
- 83.: Kolbendichtung
- 86.: radial innerer Lamellenträger
- 88.: Verzahnung
- 90.: Verzahnung
- 92.: radial äußerer Lamellenträger
- 93.: Druckquelle
- 94.: Antriebsnocke
- 95.: Fluidmittelvorrat
- 96.: Umschaltvorrichtung
- 97.: Druckkreis
- 98.: Umschaltventil
- 100.: Steuervorrichtung
- 102.: Elektromagnet
- 104.: Elektromagnet
- 106.: Außenkörper
- 108.: Wälzelemententeil
- 110.: Innenkörper
- 112.: antriebsseitige Druckscheibe
- 114.: abtriebsseitige Druckscheibe
- 116.: Rückschlagventil
- 118.: Verschlußdeckel
- 120.: Schaft
- 121.: Verliersicherung
- 122.: Aufnahmeöffnung
- 124.: Durchflußöffnung
- 130.: erster Strömungsweg
- 132.: zweiter Strömungsweg
- 134.: Kanal
- 136.: Kanal
- 142.: erste Wandung
- 144.: zweite Wandung
- 152.: Strömungsdurchlaß
- 160.: Druckbereichsverbindung
- 162.: Kupplungsfluid=Durchlaßeinrichtung
- 164.: Fluidraumtrennung
- 166.: Axialanschlag
- 168.: Zwangsströmungsführung
- 170.: Abdichtung
- 172.: Endlamelle
- 176.: Sicherungsring

## Patentansprüche

1. Hydrodynamische Kopplungsvorrichtung, aufweisend zumindest ein mit einem Antrieb (2) über ein Kupplungsgehäuse (5) verbundenes Pumpenrad (17) und ein mit einem Abtrieb (43) verbundenes Turbinenrad (19) zur Bildung eines hydrodynamischen Kreises (24), eine Überbrückungskupplung (56) mit wenigstens einem zwischen einer Ausrückposition und einer Einrückposition wechselbaren Kolben (54) und zumindest einer zwischen diesem und einer benachbarten Abstützung wirksamen Reibfläche zur Verbindung des Antriebs (2) mit dem Abtrieb (43), wobei die Überbrückungskupplung(56) in Ausrückposition des Kolbens (54) die Nutzung des hydrodynamischen Kreises (24) zur Übertragung des zumindest überwiegenden Anteils von Drehmoment zwischen Antrieb (2) und Abtrieb (43) erlaubt, während sie in Einrückposition des Kolbens (54) eine Umgehung des hydrodynamischen Kreises (24) bei der Übertragung des Drehmomentes bewirkt, und einem Druckkreis (97) in Form eines Zwei-Leitungs-Systems mit einer ersten Druckmittelleitung (60) zur Versorgung des hydrodynamischen Kreises (24) mit Kupplungsfluid und mit einer zweiten Druckmittelleitung (2) zur Versorgung eines dem Kolben (54) zugeordneten Druckraumes (55) mit Kupplungsfluid,
wobei die Überbrückungskupplung (56) vom hydrodynamischen Kreis (24) umschlossen und durch eine im wesentlichen dem Kolben (54) zugeordnete Abdichtung (170) im wesentlichen druckdicht gegenüber dem Druckraum (55) angeordnet ist, und dem Kolben (54) wenigstens eine Druckbereichsverbindung (160) zugeordnet ist, die als Drossel (80) mit zumindest einer Durchgangsöffnung (81) ausgebildet ist, welche den Druckraum (55) mit einem Kolbenraum (61) verbindet, der wirkungsmäßig dem hydrodynamischen Kreis (24) zugeordnet ist, wobei durch die Druckbereichsverbindung (160) unabhängig von der jeweiligen Stellung des Kolbens (54) zwischen dessen Ausrückposition und dessen Einrückposition und damit unabhängig vom Schaltzustand der Überbrückungskupplung (56) zumindest im wesentlichen ein Austausch von Kupplungsfluid zwischen dem hydrodynamischen Kreis (24) und dem Druckraum (55) herstellbar ist,
**dadurch gekennzeichnet,**
**dass** der Druckbereichsverbindung (160) eine Kupplungsfluid-Durchlaßeinrichtung (162) in Form einer Rückschlagventils zugeordnet ist, durch die ein die Drosselstelle (80) ergänzender Abflußweg für Kupplungsfluid frei gegeben wird, indem bei nicht eingerücktem Kolben (54) je nach von der Druckdifferenz zwischen Kolbenraum (61) und Druckraum (55) abhängiger Öffnungsweite des Rückschlagventils (162) sowie in Abhängigkeit von der Bemessung von Anzahl und/oder Größe von Durchlassöffnungen (124) der Kupplungsfluid-Durchlasseinrichtung (162) ein entsprechender Durchsatz von Kupplungsfluid aus dem hydrodynamischen Kreis (24) über dessen Kolbenraum (61) in den Druckraum (55) gelangt, während die Kupplungsfluid-Durchlaßeinrichtung (162) bei Druckanstieg im Druckraum (55) diese Verbindung des Druckraums (55) mit dem Kolbenraum (61) und daher dem hydrodynamischen Kreis (24) verschließt.

2. Hydrodynamische Kopplungsvorrichtung nach Anspruch 1
**dadurch gekennzeichnet,**
**dass** die Druckbereichsverbindung (160) im radial inneren Bereich des Koblen (54) und im wesentlichen im radialen Erstreckungsbereich der Mündungsstelle der zweiten Druckmittelleitung (62) im Druckraum (55) vorgesehen ist.

3. Hydrodynamische Kopplungsvorrichtung nach Anspruch 1 oder 2,
**dadurch gekennzeichnet,**
**dass** die Kupplungsfluid-Durchlaßeinrichtung (162) im Kolben (54) vorgesehen ist.

4. Hydrodynamische Kopplungsvorrichtung nach Anspruch 3,
**dadurch gekennzeichnet,**
**dass** die Kupplungsfluid-Durchlaßeinrichtung (162) wenigstens ein Rückschlagventil (116) aufweist, das über einen in einer Aufnahmeöffnung (122) des Kolbens (54) vorgesehenen Schaft (120) axial verlagerbar positioniert ist, und ein Strömungsdurchlaß (152) im Kolben (54) vorgesehen ist, der durch einen bei Überdruck im Druckraum (55) gegenüber dem hydrodynamischen Kreis (24) in Schließposition verbrachten Verschlußdeckel (118) überdeckt ist, durch einen bei Überdruck im hydrodynamischen Kreis (24) gegenüber dem Druckraum (55) in Öffnungsposition verbrachten Verschlußdeckel (118) dagegen freigegeben ist.

5. Hydrodynamische Kopplungsvorrichtung nach einem der Ansprüche 1 bis 4,
**dadurch gekennzeichnet,**
**dass** dem Kolben (54) eine mit dem Kupplungsgehäuse (5) fest verbundene Fluidraumtrennung (164) zugeordnet ist, die im wesentlichen zwischen dem Turbinenrad (19) und der zumindest einen Reibfläche (69) der Überbrückungskupplung (56) wirksam ist.

6. Hydrodynamische Kopplungsvorrichtung nach Anspruch 5,
**dadurch gekennzeichnet,**
**dass** die Fluidraumtrennung (164) als Axialanschlag (166) für den Kolben (54) zur Aufnahme einer von diesem in Einrückposition ausgeübten Anpreßkraft dient.

7. Hydrodynamische Kopplungsvorrichtung nach Anspruch 5 oder 6,
**dadurch gekennzeichnet,**
**dass** die Fluidraumtrennung (164) als Lamellenträger (86) zur drehfesten Aufnahme von Lamellen (65) vorgesehen ist, die durch den Kolben (54) mit an einem anderen Lamellenträger (92) drehfest, aber axial verschiebbar aufgenommenen weiteren Lamellen (66) in Eingriff bringbar sind, wobei die Fluidraumtrennung (164) mit einem dem Antrieb (2) zugeordneten antriebsseitigen Bauteil (12) und der andere Lamellenträger (92) mit einem dem Abtrieb (43) zugeordneten abtriebsseitigen Bauteil (33) in Wirkverbindung steht.

8. Hydrodynamische Kopplungsvorrichtung nach einem der Ansprüche 1 bis 7 mit einer Überbrückungskupplung, die im Wirkbereich zumindest einer Reibstelle über eine Nutung zum Durchgang von Kupplungsfluid verfügt,
**dadurch gekennzeichnet,**
**dass** die Fluidraumtrennung (164) für aus dem Druckraum (55) über die Druckbereichsverbindung (160) und die Überbrückungskupplung (56) in den hydrodynamischen Kreis (24) geleitetes Kupplungsfluid als Zwangsströmungsführung (168) wirksam ist.

## Claims

1. Hydrodynamic coupling device, comprising at least one pump impeller (17), connected to a drive (2) by way of a clutch housing (5), and a turbine rotor (19) connected to an output (43) to form a hydrodynamic circuit (24) a lockup clutch (56) having at least one piston (54) moveable between a disengaged position and an engaged position and at least one friction face acting between this and an adjacent support for connecting the drive (2) to the output (43), the lockup clutch (56) in the disengaged position of the piston (54) allowing the hydrodynamic circuit (24) to be used to transmit at least the greater part of the torque between the drive (2) and the output (43), whilst in the engaged position of the piston (54) it produces a transmission of the torque bypassing the hydrodynamic circuit (24), and a pressure circuit (97) in the form of a two-line system with a first pressure medium line (60) for supplying the hydrodynamic circuit (24) with clutch fluid and with a second pressure medium line (62) for supplying a pressure chamber (55), associated with the piston (54), with clutch fluid, the lockup clutch (56) being enclosed by the hydrodynamic circuit (24) and being sealed off substantially pressure-tight from the pressure chamber (55) by a seal (170) basically associated with the piston (54), with which piston (54) at least one pressure connection (160) is associated, which is embodied as a restrictor (80) having at least one passage (81), which connects the pressure chamber (55) to a piston chamber (61), which is operatively assigned to the hydrodynamic circuit (24), the pressure connection (160) being capable of establishing at least a substantial exchange of clutch fluid between the hydrodynamic circuit (24) and the pressure chamber (55), regardless of the respective position of the piston (54) between its disengaged position and its engaged position, and thereby regardless of the connection status of the lockup clutch (56), **characterized in that** the pressure connection (160) has a clutch fluid passage device (162) in the form of a non-return valve assigned to it, which opens up a clutch fluid discharge passage supplementing the restrictor (80), **in that** when the piston (54) is not engaged clutch fluid passes from the hydrodynamic circuit (24) via its piston chamber (61) into the pressure chamber (55) at a rate of flow corresponding to the opening width of the non-return valve (162), which depends on the pressure differential between the piston chamber (61) and the pressure chamber (55), and as a function of the design number and/or size of the through-openings (124) in the clutch fluid passage device (162), whilst the clutch fluid passage device (162), in the event of a pressure increase in the pressure chamber (55), closes this connection of the pressure chamber (55) to the piston chamber (61) and hence to the hydrodynamic circuit (24).

2. Hydrodynamic coupling device according to Claim 1, **characterized in that** the pressure connection (160) is provided in the radially inner area of the piston (5,4) and basically over the radial extent of the orifice of the second pressure medium line (62) in the pressure chamber (55).

3. Hydrodynamic coupling device according to Claim 1 or 2, **characterized in that** the clutch fluid passage device (162) is provided in the piston (54).

4. Hydrodynamic coupling device according to Claim 3, **characterized in that** the clutch fluid passage device (162) has at least one non-return valve (116), which is positioned so that it is axially displaceable via a shaft (120) provided in a locating aperture (122) of the piston (54), and a flow passage (152) is provided in the piston (54), which is covered by a sealing cover (118) brought into the closed position when the pressure in the pressure chamber (55) exceeds that in the hydrodynamic circuit (24), but which is exposed by that sealing cover (118) brought into the opening position when the pressure in the hydrodynamic circuit (24) exceeds that on the pressure chamber (55).

5. Hydrodynamic coupling device according to any one of Claims 1 to 4, **characterized in that** a fluid chamber separator (164), which is firmly connected to the clutch housing (5) and which basically acts between the turbine rotor (19) and one or more friction faces (69) of the lockup clutch (56), is associated with the piston (54).

6. Hydrodynamic coupling device according to Claim 5,
**characterized in that** the fluid chamber separator (164) serves as axial stop (166) for the piston (54) for absorbing a contact force exerted by the latter in the engaged position.

7. Hydrodynamic coupling device according to Claim 5 or 6, **characterized in that** the fluid chamber separator (164) is intended as plate carrier (86) for the rotationally fixed mounting of plates (65), which can be brought by the piston (54) into engagement with further plates (66), seated rotationally fixed but axially displaceable on another plate carrier (92), the fluid chamber separator (164) being operatively connected to a drive-side component (12) associated with the drive (2) and the other plate carrier (92) being operatively connected to an output-side component (33) associated with the output (43).

8. Hydrodynamic coupling device according to any one of Claims 1 to 7, with a lockup clutch, which in the working area of at least one friction zone has a grooving for the passage of clutch fluid, **characterized in that** the fluid chamber separator (164) acts as positive flow guide (168) for clutch fluid led out of the pressure chamber (55) via the pressure connection (160) and the lockup clutch (56) into the hydrodynamic circuit (24).

## Revendications

1. Dispositif hydrodynamique de couplage, présentant au moins une roue de pompe (17) reliée à un entraînement (2) par l'intermédiaire d'un carter d'embrayage (5) et une roue de turbine (19) reliée à une sortie (43) pour former un circuit hydrodynamique (24), un embrayage de prise directe (56) avec au moins un piston (54) pouvant alterner entre une position débrayée et une position embrayée et au moins une surface de friction active entre ce piston et un élément d'appui voisin afin de relier l'entraînement (2) à la sortie (43), sachant que l'embrayage de prise directe (56) permet, dans la position débrayée du piston (54), d'utiliser le circuit hydrodynamique (24) pour transmettre au moins une part prépondérante du couple entre l'entraînement (2) et la sortie (43), tandis que, dans la position embrayée du piston (54), il produit un contournement du circuit hydrodynamique (24) pour la transmission du couple, et un circuit de pression (97) sous la forme d'un système à deux conduites avec une première conduite de fluide hydraulique (60) pour alimenter le circuit hydrodynamique (24) en fluide d'embrayage et avec une deuxième conduite de fluide hydraulique (62) pour alimenter en fluide d'embrayage une chambre de pression (55) associée au piston (54), sachant que l'embrayage de prise directe (56) est entouré par le circuit hydrodynamique (24) et est, par un joint d'étanchéité (170) associé pour l'essentiel au piston (54), disposé essentiellement en étanchéité à la pression par rapport à la chambre de pression (55), et qu'au moins une liaison (160) de zone de pression est associée au piston (54), laquelle est réalisée sous forme d'étranglement (80) avec au moins une ouverture de passage (81) qui relie la chambre de pression (55) à une chambre de piston (61) qui est fonctionnellement associée au circuit hydrodynamique (24), sachant qu'on peut réaliser par la liaison (160) de zone de pression, indépendamment de la position respective du piston (54) entre sa position débrayée et sa position embrayée et donc indépendamment de l'état de commutation de l'embrayage de prise directe (56), au moins pour l'essentiel un échange de fluide d'embrayage entre le circuit hydrodynamique (24) et la chambre de pression (55),
**caractérisé en ce qu'**un organe (162) de passage de fluide d'embrayage sous la forme d'un clapet anti-retour est associé à la liaison (160) de zone de pression, par lequel est libéré pour le fluide d'embrayage un chemin d'écoulement complétant le point d'étranglement (80), par le fait que lorsque le piston (54) n'est pas embrayé, selon le degré d'ouverture du clapet anti-retour (162) qui dépend de la différence de pression entre la chambre de piston (61) et la chambre de pression (55) ainsi qu'en fonction du dimensionnement du nombre et/ou de la taille des ouvertures de passage (124) de l'organe (162) de passage de fluide d'embrayage, un débit correspondant de fluide d'embrayage parvient du circuit hydrodynamique (24), via la chambre de piston (61) de ce dernier, dans la chambre de pression (55), tandis qu'en cas d'augmentation de la pression dans la chambre de pression (55), l'organe (162) de passage de fluide d'embrayage ferme cette liaison de la chambre de pression (55) avec la chambre de piston (61) et donc avec le circuit hydrodynamique (24).

2. Dispositif hydrodynamique de couplage selon la revendication 1, **caractérisé en ce que** la liaison (160) de zone de pression est prévue dans la région radialement intérieure du piston (54) et pour l'essentiel dans la région d'étendue radiale du point d'embouchure de la deuxième conduite de fluide hydraulique (62) dans la chambre de pression (55).

3. Dispositif hydrodynamique de couplage selon la revendication 1 ou 2, **caractérisé en ce que** l'organe (162) de passage de fluide d'embrayage est prévu dans le piston (54).

4. Dispositif hydrodynamique de couplage selon la revendication 3, **caractérisé en ce que** l'organe (162) de passage de fluide d'embrayage présente au moins un clapet anti-retour (116) qui, au moyen d'une tige (120) prévue dans une ouverture réceptrice (122) du piston (54), est positionné avec possibilité de déplacement axial, et un passage d'écoulement (152) est prévu dans le piston (54) qui est recouvert par un couvercle de fermeture (118) amené en position fermée en cas de surpression dans la chambre de pression (55) par rapport au circuit hydrodynamique (24), tandis qu'il est libéré par un couvercle de fermeture (118) amené en position ouverte en cas de surpression dans le circuit hydrodynamique (24) par rapport à la chambre de pression (55).

5. Dispositif hydrodynamique de couplage selon l'une quelconque des revendications 1 à 4, **caractérisé en ce qu'**une séparation (164) de chambre de fluide fixement reliée au carter d'embrayage (5) est associée au piston (54), laquelle est active pour l'essentiel entre la roue de turbine (19) et la surface de friction au moins unique (69) de l'embrayage de prise directe (56).

6. Dispositif hydrodynamique de couplage selon la revendication 5, **caractérisé en ce que** la séparation (164) de chambre de fluide sert de butée axiale (166) pour le piston (54) afin d'absorber une force d'application exercée par ce dernier en position embrayée.

7. Dispositif hydrodynamique de couplage selon la revendication 5 ou 6, **caractérisé en ce que** la séparation (164) de chambre de fluide est prévue sous forme de porte-disques (86) destiné à recevoir en solidarité de rotation des disques (65) qui peuvent être amenés par le piston (54) en engagement avec d'autres disques (66) reçus en solidarité de rotation mais à translation axiale sur un autre porte-disques (92), sachant que la séparation (164) de chambre de fluide se trouve en liaison fonctionnelle avec un élément (12) côté entraînement, associé à l'entraînement (2), et l'autre porte-disques (92) avec un élément (33) côté sortie, associé à la sortie (43).

8. Dispositif hydrodynamique de couplage selon l'une quelconque des revendications 1 à 7 avec un embrayage de prise directe qui dispose dans la région active d'au moins un point de friction au moyen d'un rainurage pour le passage de fluide d'embrayage,
**caractérisé en ce que** la séparation (164) de chambre de fluide est active pour du fluide d'embrayage qui, sous la forme d'un guidage (168) d'écoulement forcé, est dirigé de la chambre de pression (55) dans le circuit hydrodynamique (24) via la liaison (160) de zone de pression et l'embrayage de prise directe (56).
